**Europäisches Patentamt**

**European Patent Office**

**Office Européen des brevets**

(19)

(11) Numéro de publication : **0 220 105 B1**

# FASCICULE DE BREVET EUROPEEN

(12)

(45) Date de publication du fascicule du brevet :
02.01.91 Bulletin 91/01

(51) Int. Cl.⁵ : **C08K 3/38**, C08L 61/06, C08J 5/24, // (C08L61/06, C08K3:38)

(21) Numéro de dépôt : 86402186.0

(22) Date de dépôt : 03.10.86

(54) **Procédé de fabrication de préimprégnés sans fluage à base de résine phénolique.**

(30) Priorité : 10.10.85 FR 8515007

(43) Date de publication de la demande :
29.04.87 Bulletin 87/18

(45) Mention de la délivrance du brevet :
02.01.91 Bulletin 91/01

(84) Etats contractants désignés :
AT BE CH DE GB IT LI LU NL SE

(56) Documents cités :
EP-A- 176 378
BE-A- 676 219
FR-A- 2 568 575
US-A- 3 897 387
CHEMICAL ABSTRACTS, vol. 96, 1982, page 312, résumé no. 56972t, Columbus, Ohio, US; & JP-A-81 133 154 (IG-TECHNICAL RESEARCH, INC.) 19-10-1981

(73) Titulaire : **NORSOLOR S.A.**
**Tour Aurore Place des Reflets**
**F-92080 Paris la Défense Cédex 5 (FR)**

(72) Inventeur : **Boinot, François**
**54, rue Henri Martin**
**F-62800 Lièvin (FR)**
Inventeur : **Cousin, Michèl**
**81, rue Wattiez**
**F-62218 Loison sous Lens (FR)**

(74) Mandataire : **Rieux, Michel**
**c/o NORSOLOR Service Propriété Industrielle**
**B.P. 57**
**F-62670 Mazingarbe (FR)**

## Description

La présente invention concerne un nouveau procédé de préparation de préimprégnés sans fluage à base de résine phénolique.

Les préimprégnés sont des matériaux mixtes que l'on prépare à partir de résines thermodurcissables et de renforts et éventuellement de charges. Le renfort utilisé est à l'état de fibres telles que fibres cellulosiques ou fibresde verre en particulier rovings de fibres de verre, de non-tissé par exemple en polyester de haut poids moléculaire, en chlorure de polyvinyle, de mat de fibres de verre ou tissu par exemple en polyamide aromatique, en verre ou en amiante. Ces matériaux préimprégnés présentent l'avantage de pouvoir être moulés directement à la presse sans qu'il soit nécessaire de préparer au préalable un mélange constitué de résine, de catalyseurs, de charges et de pigments. Les préimprégnés peuvent être divisés en deux catégories : d'une part, les préimprégnés "dits sans fluage", et d'autre part, les préimprégnés "dits avec fluage". Les préimprégnés "sans fluage" sont généralement constitués uniquement par des renforts de tissus de fibres de verre imprégnés d'une résine convenable conduite à un stade approprié de polymérisation partielle, stade dit "B". A ce stade là, les résines ne poissent pratiquement plus mais sont encore solubles et fusibles. Un tel matériau mixte mis sous presse chauffé permet un déplacement de la résine entre les fibres et conduit à une distribution uniforme du verre et de la résine. Après fermeture du moule, la résine est complètement durcie. On fabrique les préimprégnés sans fluage à partir de résines époxy, de résines formo-phénoliques et aussi de résines polyesters à base de diallyl phtalate.

Les procédés utilisés jusqu'à présent consistent à mettre en oeuvre des résines contenant des solvants. C'est ainsi que les préimprégnés sans fluage fabriqués à partir de résines phénoliques sont obtenus à partir de résines phénoliques contenant un solvant choisi en particulier parmi un alcool : le tissu de fibres de verre est imprégné par la résine en solution ce qui permet une meilleure dispersion de la résine dans le tissu de verre. Ensuite le solvant est évaporé par passage dans un four.

Après imprégnation le matériau mixte est mis sous presse chauffée. De tels procédés conduisent à des produits finis qui peuvent présenter l'inconvénient de se désolidariser lors de la mise en oeuvre ce qui limite beaucoup leurs domaines d'application : ils sont utilisés en particulier surtout pour la fabrication de circuits imprégnés ou de matériaux pour l'aéronautique.

La difficulté majeure qui doit être surmontée pour fabriquer ces préimprégnés sans fluage à partir de résine ne contenant pas de solvant est de disposer de résine qui soit assez fluide à 50 °C pour pouvoir être bien mouillée dans le tissu de verre et dont l'évolution de la viscosité durant les premières heures doit donc être pratiquement nulle à température ambiante.

En outre, passées les premières 24 heures il est indispensable que cette viscosité évolue rapidement dans le temps à température ambiante ou aussi à température plus élevée de façon que l'on puisse obtenir un préimprégné sans fluage qui présente la pégosité adéquate.

On voit donc qu'il existe toute une série de problèmes antagonistes à résoudre, la résolution de ces problèmes devant aboutir à l'obtention de résines phénoliques présentant une viscosité adaptée mais aussi une viscosité qui puisse évoluer de façon particulière dans le temps.

Le besoin se fait donc sentir de mettre au point des résines phénoliques ne contenant pas de solvant et convenant pour la fabrication de préimprégnés sans fluage.

Il est connu dans la fabrication de préimprégnés avec fluage encore appelés "mats préimprégnés" d'additionner un épaississant choisi parmi les oxydes alcalino-terreux tel que l'oxyde de magnésium.

L'addition d'un tel composé à la résine polyester permet d'obtenir une résine présentant une viscosité souhaitée mais aussi une stabilité suffisante qui permet à la résine de ne pas épaissir trop rapidement sous peine d'obtenir une imprégnation médiocre des fils de verre coupés utilisés dans la technologie des mats préimprégnés avec fluage.

On aurait pu penser que la simple transposition des oxydes d'alcalino-terreux utilisés pour les résines polyester dans la technologie des préimprégnés avec fluage aux résines phénoliques utilisés dans la technologie des préimprégnés sans fluage aurait permis d'obtenir des compositions pâteuses de résines phénoliques convenant pour la fabrication de préimprégnés phénoliques sans fluage. Malheureusement, il n'en est rien. On constate en effet que l'addition d'oxyde d'alcalino-terreux aux résines phénoliques conduit à des compositions résineuses qui ne sont pas homogènes, constituées en particulier d'une croûte en surface. De plus la mise en oeuvre d'oxyde alcalino-terreux conduit à des résines phénoliques dont la viscosité évolue trop rapidement avec le temps et de ce fait ne sont plus utilisables.

La présente invention concerne un nouveau procédé de fabrication de préimprégnés sans fluage à base de résines phénoliques du type résols, éventuellement de charges de pigments, caractérisé en ce que la résine phénolique est additionnée au plus de 60% en poids d'un additif constitué d'un métaborate alcalin ou alcalino-terreux.

On a en effet trouvé que la mise en oeuvre d'un tel additif permet d'obtenir une composition résineuse homogène, une composition dont la viscosité évolue peu durant les premières 24 heures et évolue convenablement par la suite. On obtient ainsi une composition douée de propriétés telles qu'elle permet la fabrication de préimprégnés sans fluage.

Selon une autre caractéristique des compositions de l'invention la quantité d'additif mise en oeuvre est égale au plus à 60% en poids par rapport au poids de la résine phénolique mise en oeuvre et de préférence entre 2 et 40% en poids. En dessous de 2% on n'observe pratiquement aucune incidence sur la viscosité de la composition ; au-delà de 60% en poids, il n'est plus possible de maîtriser la viscosité de la composition ce qui la rend inadaptée pour la fabrication de préimprégnés sans fluage.

Les métaborates alcalins ou alcalino-terreux utilisés pour l'obtention des compositions de résines phénoliques objet de l'invention, sont choisis de préférence parmi les métaborates de baryum ou de lithium ou de calcium. Pour des raisons de disponibilité et des facilités d'obtention on utilise préférentiellement le sel de baryum.

Le procédé de la présente demande présente l'avantage par rapport aux procédés antérieurs de ne pas mettre en oeuvre de solvants ce qui permet de disposer de résines phénoliques particulièrement adaptées pour la fabrication des préimprégnés sans fluage. La bonne adaptation de ces résines est illustrée par les propriétés mécaniques des préimprégnés pressés : on observe en effet de meilleures propriétés sur les préimprégnés pressés et préparés selon la présente demande qu'avec les préimprégnés pressés obtenus en partant de résines phénoliques contenant des solvants.

Les résols utilisés pour la fabrication des compositions conformes à l'invention sont des résols connus préparés par condensation de formol sur le phénol en présence d'un catalyseur alcalin. Ils présentent un rapport molaire F/P compris entre 1,2 et 2,5 et contiennent éventuellement des additifs tels que plastifiants, tensio-actifs, charges telles que silice, kaolin, hydroxyde d'aluminium. Un autre avantage du procédé de l'invention c'est que les résines phénoliques ainsi préparées sont telles qu'il n'est pas nécessaire de leur ajouter des catalyseurs de durcissement : la réticulation de ces résines se fait donc uniquement à chaud et sous faible pression inférieure à 30 bars.

Pour la fabrication des préimprégnés sans fluage, on utilise de façon connue des renforts constitués en particulier de tissus de verre, tissus de carbone, tissus de polyamide...

La quantité de tissus utilisés est telle que le mat préimprégné fini en contient au plus 80% en poids par rapport au poids total du matériau fini.

Le procédé objet de l'invention permet de fabriquer des préimprégnés sans fluage qui présentent de bonnes propriétés mécaniques ainsi que de meilleures résistances au feu, à la combustion ce qui élargit leurs champs d'application en particulier au matériel roulant des transports en commun : trains, métros, avions. De plus le matériau a une meilleure tenue thermique.

Les préimprégnés sans fluage obtenus selon le procédé objet de l'invention peuvent être mis en oeuvre après stockage de façon connue en les soumettant par exemple dans des presses à des pressions comprises entre 1 et 100 bars pendant 1 à 10 minutes par millimètre d'épaisseur à une tempéraure comprise entre 100 à 200°C.

Les exemples suivants illustrent la présente invention :

## EXEMPLE 1

On utilise 100 parties en poids d'une résine phénolique qui présente les caractéristiques suivantes :

Rapport molaire F/P : 1,5/1

Viscosité à 20°C : 45 Pa.s

Extrait sec : 95%

Réactivité : 2 minutes (déterminée selon une méthode qui consiste à mesurer le pic d'exothermique d'une résine additionnée de 10% d'acide sulfurique et d'éthanol.

On ajoute à cette résine 7,5 parties de métaborate de calcium. On obtient une composition fine homogène qui après épaississement reste homogène. Après addition du métaborate de calcium la viscosité du mélange est de 68 Pa.s.

Au bout de 4 heures elle est de 68 Pa.s
Au bout de 6 heures elle est de 70 Pa.s
Au bout de 20 heures elle est de 72 Pa.s

## EXEMPLE 2

On met en oeuvre 100 parties de la résine de l'exemple 1 et 7,5 parties d'oxyde de magnésium qui est utilisé de façon connue avec les polyesters pour fabriquer les préimprégnés à fluage.

La viscosité évolue de la façon suivante :

| Temps (heures) | 0 | 1 | 2 | 3 | 4 | 5 | 6 |
|---|---|---|---|---|---|---|---|
| Viscosité (Pa.s) | 304 | 1030 | 2600 | 5600 | 7800 | 14500 | $10^5$ |

## EXEMPLE 3

L'exemple 1 est répété avec une résine qui présente les caractéristiques suivantes :

Extrait sec : 85%,

Viscosité : 5,5 Pa.s

La viscosité évolue de la façon suivante :

| Temps (jours) | 0 | 1 | 3 | 5 | 10 | 12 | 29 |
|---|---|---|---|---|---|---|---|
| Viscosité (Pa.s) | 5,5 | 250 | 1500 | 5000 | 15000 | 22000 | 45000 |

## EXEMPLE 4

L'exemple 1 est répété. Le tableau suivant donne l'évolution de la viscosité en fonction de la température :

4

| Température (°C) | 20 | 30 | 40 | 50 |
|---|---|---|---|---|
| Viscosité (Pa.s) | 68 | 17 | 6 | 2,3 |

La même résine maintenue à 50°C évolue de la façon suivante :

| Temps (heures | 0 | 17 | 34 |
|---|---|---|---|
| Viscosité (Pa.s) à 20 °C | 45 | 80 | 190 |

## EXEMPLE 5

On met en oeuvre la résine phénolique de l'exemple 1.

On additionne à cette résine 7,5 parties en poids de métaborate de calcium. On fabrique alors un préimprégné avec du tissu de verre vendu par laSociété CHOMARAT sous la référence CHOMARAT 500 : ce produit a un grammage de 500g/m². On réalise un préimprégné de 8 plis et de 2,2 mm d'épaisseur. Le préimprégné contient 75% de verre.

Ce préimprégné est cuit à 145°C pendant 15 minutes et soumis à une pression de 5 bars dans une presse.

Le produit fini présente les caractéristiques suivantes :

| Flexion (M.Pa) Norme NFT 51001 | Module 30 000 | Contrainte 800 |
|---|---|---|
| Dureté Barcol | 70 ||

A titre de comparaison on utilise un préimprégné du commerce pour réaliser un matériau présentant aussi 8 plis et 2,2 mm d'épaisseur. Ce préimprégné phénolique est fabriqué par le procédé connu mettant en oeuvre des solvants. On le met sous presse dans les mêmes conditions que ci-dessus. Le produit fini présente les caractéristiques suivantes :

| Flexion M.Pa | Module 28500 | Contrainte 400 |
|---|---|---|
| Dureté Barcol | 65 | |

## EXEMPLE 6

On met en oeuvre une résine qui présente les caractéristiques suivantes :

Viscosité à 20°C : 27 Pa.s

Extrait sec : 93%

On ajoute à cette résine différentes quantités de métaborate de baryum. Le tableau suivant donne l'évolution de la viscosité pour différentes quantités de métaborate de baryum.

| Teneur en métaborate de baryum % / Temps (jours) | Viscosité (Pa.s) | | | | |
|---|---|---|---|---|---|
| | 5 | 8 | 10 | 13 | 15 |
| 0 | 45,0 | 55 | 54 | 65 | |
| 5 | 412 | 1090 | 2000 | 5160 | |
| 11 | 872 | 6960 | > 16000 | ⟶ | |

## EXEMPLE 7

On met en oeuvre 100 parties en poids d'une résine phénolique qui présente un extrait sec de 96%, avec 8,5 parties de métaborate de lithium. La viscosité du mélange évolue de la façon suivante :

| Temps (jours) | 0 | 1 | 7 |
|---|---|---|---|
| Viscosité (Pa.s) | 82,5 | 178 | 215 |

## Revendications

Procédé de fabrication de préimprégné sans fluage à base de résines phénoliques du type résols, éventuellement de charges de pigments, caractérisé en ce que la résine phénolique est additionnée au plus de 60% en poids d'un additif constitué d'un métaborate alcalin ou alcalino-terreux, la résine phénolique présentant un rapport molaire F/P compris entre 1,2 et 2,5, un extrait sec entre, 85% et 96% et une réactivité telle que les résines phénoliques sont durcies sans catalyseur de durcissement.

## Ansprüche

Verfahren zur Herstellung von nicht fließenden Prepregs auf der Basis von Phenolharzen des Resoltyps, gegebenenfalls Füllstoffen und Pigmenten, dadurch gekennzeichnet, daß dem Phenolharz höchstens 60 Gew.-% eines von einem Alkali- oder Erdalkalimetaborat gebildeten Zusatzes zugegeben werden, wobei das Phenolharz ein Molverhältnis F/P zwischen 1,2 und 2,5, einen Trockenauszug zwischen 85% und 96% und eine solche Reaktivität besitzt, daß die Phenolharze ohne Aushärtungskatalysator ausgehärtet werden.

## Claims

Process for the manufacture of creep-free prepregs based on phenolic resins of the resol type and, if desired, of fillers, of pigments, characterized in that at most 60% by weight of an additive consisting of an alkali metal or alkaline-earth metal metaborate is added to the phenolic resin, the phenolic resin having a F/P molar ratio of between 1.2 and 2.5, a solid content between 85% and 96% and a reactivity such that the phenolic resins are cured without a hardening catalyst.